**Europäisches Patentamt**

**European Patent Office**

**Office européen des brevets**

(11) Veröffentlichungsnummer: **0 416 553 A1**

(12) **EUROPÄISCHE PATENTANMELDUNG**

(21) Anmeldenummer: **90117003.5**

(22) Anmeldetag: **04.09.90**

(51) Int. Cl.⁵: **B23B 21/00, B23Q 5/40**

(30) Priorität: **06.09.89 DE 3929659**

(43) Veröffentlichungstag der Anmeldung:
**13.03.91 Patentblatt 91/11**

(84) Benannte Vertragsstaaten:
**AT BE CH DE DK ES FR GB GR IT LI LU NL SE**

(71) Anmelder: **EMCO MAIER + CO., FABRIK FÜR
SPEZIALMASCHINEN**
**Friedmann-Maier-Strasse 9**
**A-5400 Hallein(AT)**

(72) Erfinder: **Mair, Hans**
**Südtirolerstrasse 32**
**A-5500 Bischofshofen(AT)**
Erfinder: **Reiner, Johann**
**a.D.Nr.248**
**A-8972 Ramsau(AT)**

(74) Vertreter: **Schaumburg, Thoenes &
Englaender**
**Mauerkircherstrasse 31 Postfach 86 07 48**
**W-8000 München 86(DE)**

(54) **Drehmaschine.**

㉗ Drehmaschine mit einem Maschinenbett (3) , einem darauf fest angeordneten Hauptspindelstock (4) für eine motorgetriebene Hauptspindel (6), einem in Richtung der Hauptspindelachse verschiebbar angeordneten Reitstock (10) und einem Kreuztisch (12), welcher einen in Richtung der Hauptspindelachse (8) verstellbaren Längstisch (14) und einen dazu quer verstellbaren Quertisch (16) umfaßt, wobei der Längstisch (14) über eine drehantreibbare Längsleitspindel (46) und der Quertisch (16) über eine drehantreibbare Querleitspindel betätigbar ist; die Längsleitspindel (46) und die Querleitspindel (62) sind jeweils mit einem Handrad (50 bzw. 64) ausgestattet, welches mit einem an einen zugeordneten Antriebsmotor (54 bzw 74) ankuppelbaren Getrieberad (52, 68) fest verbunden ist. Die Antriebsmotoren sind durch eine DV-Anlage (80) ansteuerbar. Außerdem kann am Maschinenbett (3) ein Vertikalspindelständer mit einer motorgetriebenen, vertikal verstellbaren Vertikalspindel befestigt werden, wobei der Verstellantrieb für die Vertikalspindel eine Vertikalleitspindel mit einem Handrad umfaßt, welches ebenfalls mit einem an einen zugeordneten NC-steuerbaren Antriebsmotor ankuppel-baren Getrieberad fest verbunden ist.

Fig. 1

EP 0 416 553 A1

## DREHMASCHINE

Die Erfindung betrifft eine Drehmaschine der im Oberbegriff des Ansprüches 1 genannten Art.

Zwischen der Hauptspindel und dem Reitstock derartiger Drehmaschinen wird im allgemeinen ein Drehteil aufgenommen, welches über die Hauptspindel um seine Längsachse in Drehung versetzt wird. Auf dem Quertisch des Kreuztisches ist ein Drehstahl oder dergleichen befestigt, welcher durch die Verstellbewegung des Quertisches senkrecht zur Werkstückachse und durch die Verstellbewegung des Längstisches parallel zur Werkstückachse verfahren werden kann, so daß in der üblichen Weise eine Drehbearbeitung des Werkstückes erfolgen kann.

Die Längsleitspindel und die Querleitspindel sind bei einfacheren Drehmaschinen, insbesondere kleinen Tischbzw. Hobbydrehmaschinen über Handräder betätigbar, die jeweils an einem Ende der zugeordneten Leitspindel drehfest angeordnet sind. Mit derartigen Drehmaschinen sind im allgemeinen nur einfachere Dreharbeiten durchführbar, bei denen nicht gleichzeitig überlagerte und genau zueinander koordinierte Bewegungen des Längsschlittens und des Querschlittens erforderlich sind.

Es sind auch bereits hochautomatisierte Drehmaschinen der gattungsgemäßen Art bekannt, bei denen die Längsleitspindel und die Querleitspindel jeweils durch von einer NC-Steuerung angesteuerte Stellmotoren betätigbar sind. Der hohe technische und finanzielle Aufwand moderner NC-Steuerungen und NC-Antriebe lohnt sich im allgemeinen nur für Produktionsmaschinen mit hoher Zerspannungsleistung und einer äußerst hohen Fertgungsgenauigkeit. Diese für moderne Produktionsmaschinen geforderten Eigenschaften bedingen wiederum, daß auch die NC-Steuerungen und die NC-Antriebe dem modernsten Stand der Technik entsprechen und entsprechend aufwendig und teuer sind. Derartige Steuerungen und Antriebe sind deshalb für den Einsatz bei kleineren Drehmaschinen für den Werkstätten- oder Heimwerkerbereich ungeeignet, da sie den Preis der eigentlichen Werkzeugmaschine unangemessen erhöhen würden.

Es sind auch ganz allgemein schon Werkzeugmaschinen bekannt, bei denen Vorschubspindeln sowohl über Handräder als auch über steuerbare Antriebsmotoren betätigt werden können. Dabei sind die Antriebsmotoren beispielsweise an dem dem Handrad abgewandten Ende der jeweiligen Leitspindel angeordnet oder die Einleitung des Drehmomentes der Antriebsmotoren erfolgt irgendwo zwischen den beiden Leitspindelenden über ein mit dieser Leitspindel gekoppeltes Getriebesystem. In jedem Fall müssen die Leitspindeln in aufwendiger Weise konstruktiv an die Möglichkeit angepaßt werden, sie sowohl manuell über Handräder als auch über steuerbare Motoren anzutreiben. Dabei muß insbesondere auch die Möglichkeit vorgesehen sein, bei länger andauernder manueller Betätigung die Antriebsmotoren von den Leitspindeln zu trennen, damit diese nicht ständig mitbewegt werden müssen. Dazu dienen im allgemeinen aufwendige elektrisch oder mechanisch betätigbare Kupplungseinrichtungen. Speziell bei Drehmaschinen der im Oberbegriff des Ansprüches 1 genannten Art besteht ein besonderes Hindernis für den Anbau eines Antriebsmotors an dem dem Handrad abgewandten Ende der Längsleitspindel, da an diesem Ende im allgemeinen ein Getriebe vorgesehen ist, über das die Längsleitspindel mit dem Antrieb der Hauptspindel kuppelbar ist, um beispielsweise Gewinde oder andere spiralartige Bearbeitungen durchzuführen.

Es ist die Aufgabe der vorliegenden Erfindung, eine Drehmaschine der im Oberbegriff des Ansprüches 1 genannten Art zu schaffen, die bei einfacher und preiswerter Ausführung für eine manuelle und eine motorgetriebene Betätigung zumindest des Längs- und Quertisches geeignet ist.

Diese Aufgabe ist erfindungsgemäß durch die im Kennzeichen des Ansprüches 1 genannten Merkmale gelöst.

Das Handrad jeder der Leitspindeln ist direkt mit einem Getrieberad fest verbinden, in das das Drehmoment eines jeweils zugeordneten Antriebsmotors eingeleitet werden kann.

Bei der erfindungsgemäßen Lösung sind weitere Eingriffe in die Konstruktion der Maschine nicht erforderlich. Die Antriebsmotoren können in einfacher Weise zum Beispiel achsparallel zur jeweiligen Leitspindel an dem Bauteil befestigt werden, in welchem die Leitspindel gelagert ist, so daß das Handrad mit dem jeweiligen zugeordneten Antriebsmotor mittels einer äußerst einfachen Getriebeanordnung verbunden werden kann. Da sowohl der manuelle Antrieb als auch der motorische Antrieb über das Handrad in die Leitspindel eingeleitet werden, braucht die Lagerung der Leitspindel nur an dem das Handrad tragenden Ende für die bei der Einleitung des Drehmomentes auftretende Querkräfte ausgebildet zu sein.

In einer weiteren Ausgestaltung der erfindungsgemäßen Drehmaschine ist vorgesehen, daß am Maschinenbett ein Vertikalspindelständer mit einer motorgetriebenen, vertikal verstellbaren Vertikalspindel befestigbar ist, wobei der Verstellantrieb für die Vertikalspindel eine Vertikalleitspindel mit einem Handrad umfaßt, welches ebenso wie die Handräder für den Kreuzschlitten mit einem an einen zugeordneten Stellmotor ankuppelbaren Getrieberad fest verbunden ist. Auf diese Weise läßt sich unter Verwendung des oben beschriebenen erfindungsgemäßen Prinzips die Drehmaschine in einfacher Weise zu einer Vertikalbohr- und Fräsmaschine mit motorischem Vertikalspindelvorschub erweitern.

Die Handräder sind in jedem Fall an für die Bedienungsperson gut zugänglichen Stellen der Maschine angeordnet. Bei einer entsprechend einfachen konstruktiven Ausbildung der Getriebeanordnung kann deshalb auch die Verbindung zwischen dem Antriebsmotor und dem jeweiligen Handrad in einfacher Weise hergestellt bzw. wieder getrennt werden. Damit lassen sich für den Fall, daß eine manuelle Vorschubbetätigung durchgeführt werden soll, die Antriebsmotoren in einfacher Weise von den Leitspindeln abkoppeln, so daß sie bei der manuellen Vorschubbetätigung nicht mitbewegt werden müssen. Gesonderte Kupplungseinrichtungen für das wahlweise An- oder Abkuppeln der Antriebsmotoren sind nicht erforderlich.

In einer bevorzugten Ausgestaltung der Erfindung ist das Getrieberad mit dem Handrad jeweils einstückig ausgebildet; ein deratiges Bauteil läßt sich in einfacher und kostengünstiger Weise beispielsweise durch Präzisionsspritzguß oder dergleichen herstellen.

Ebenfalls in Sinne einer konstruktiven Vereinfachung ist vorgesehen, daß das Getrieberad als Zahnriemenscheibe ausgebildet ist, die über einen Zahnriemen mit einem entsprechenden, auf der Ausgangswelle des Antriebsmotors angeordneten Zahnritzel verbunden ist. Die Montage eines Antriebsmotors und die Verbindung dieses Antriebsmotors mit dem Handrad über einen Zahnriemen ist ohne weiteres mit Werkstattmitteln durchführbar und auch für Heimwerker ohne besondere handwerkliche Ausbildung leicht möglich.

Bei einer Drehmaschine, bei der in bekannter Weise an jedem Handrad ein Kurbelgriff angeordnet ist, ist erfindungsgemäß der Kurbelgriff lösbar am Handgriff befestigt, damit er für den motorischen Vorschubbetrieb abgenommen werden kann.

Die Antriebsmotoren für die Leitspindeln können in ihrer einfachsten Version durch Schalter ein- und aus schaltbare Elektromotoren sein. In einer bevorzugten Ausgestaltung der Erfindung ist jedoch vorgesehen, daß die Antriebsmotoren über eine NC-Steuerung ansteuerbar sind, so daß die Maschine automatisch gesteuerte Bearbeitungsprogramme auch für komplizierte Werkstückkonturen durchführen kann, bei denen die Bewegungen des Längstisches, des Quertisches und gegebenenfalls der Vertikalspindel gleichzeitig und zueinander koordiniert erfolgen. Als NC-Steuerung ist vorzugsweise eine DV-Anlage in der Größenordnung eines Personal Computer vorgesehen, welcher nicht nur die Wegsteuerung der Antriebsmotoren sondern auch deren Leistungssteuerung durchführt.

Die Antriebsmotoren sind gemäß einer Ausgestaltung der Erfindung jeweils als Schrittmotoren mit integrierter Bremse ausgebildet. Nach Abschalten der Stromzufuhr werden die Bremsen automatisch aktiviert, so daß die Motoren im wesentlichen ohne Nachlauf abbremsbar sind.

In einer anderen Ausgestaltung der Erfindung ist vorgesehen, daß das Anfahren und das Abbremsen der Schrittmotoren durch die NC-Steuerung gesteuert wird, wobei die NC-Steuerung eine einem gewünschten Anfahrverlauf bzw. Abbremsverlauf der Schrittmotoren entsprechende, zunehmende bzw. abnehmende Pulsfolgefrequenz ausgibt.

Ein Ausführungsbeispiel der Erfindung ist in der Zeichnung dargestellt und im folgenden näher beschrieben. Es zeigen:

Figur 1 eine Seitenansicht einer Drehmaschine mit Handrädern und Antriebsmotoren für die Längsleitspindel sowie die Querleitspindel;

Figur 2 eine Draufsicht auf eine Drehmaschine gemäß Figur 1;

Figur 3 einen in der in Figur 1 angedeuteten Weise an die Drehmaschine ansetz-baren Vertikalspindelständer mit einem Handrad und einem Antriebs-motor für die Vertikalleitspindel.

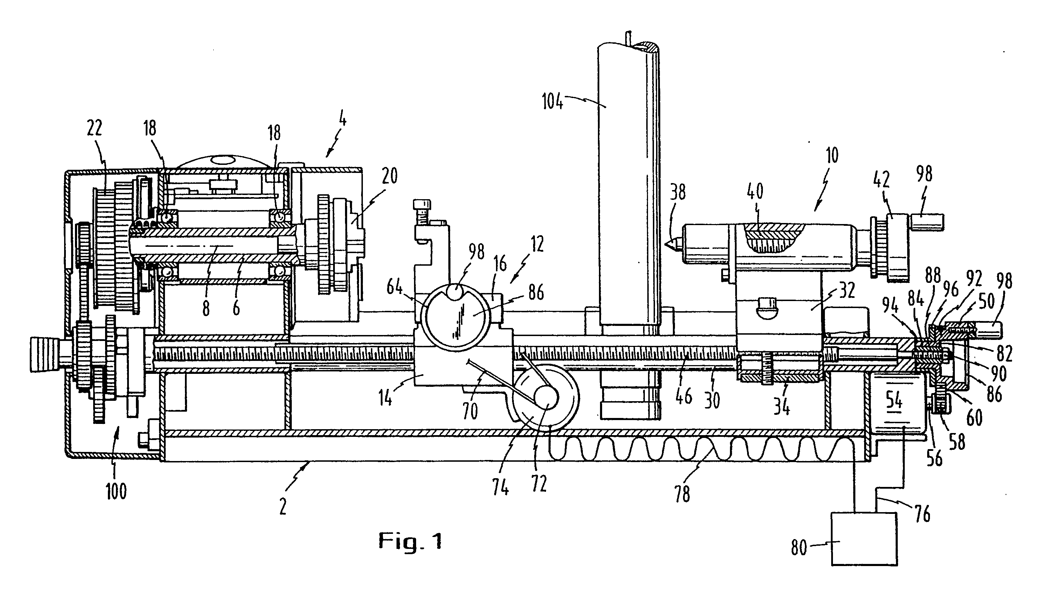

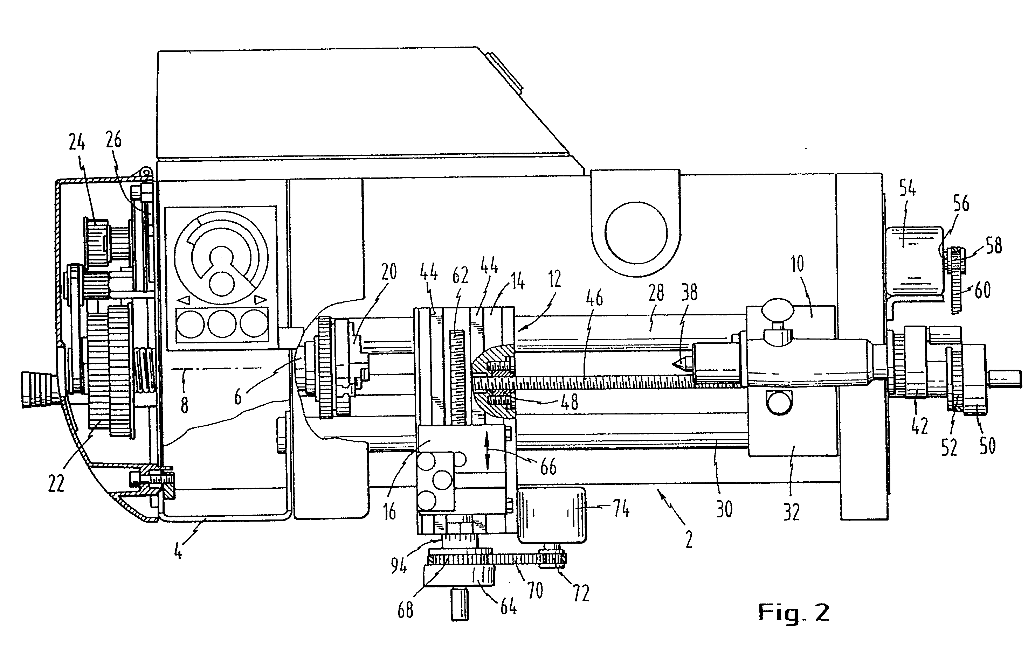

Die in den Figuren 1 und 2 dargestellte Drehmaschine umfaßt ein Maschinenbett 3, einen darauf fest angeordneten Hauptspindelstock 4 für eine motorgetriebene Hauptspindel 6, einen in Richtung der Haupspindelachse 8 längsverschiebbar auf dem Maschinenbett 3 gelagerten Reitstock 10 und einen zwischen der Hauptspindel 6 und dem Reitstock 10 angeordneten Kreuztisch 12 mit einem in Richtung der Hauptspindelachse 8 längsverschiebbaren Längstisch 14 und einem dazu quer verschiebbaren Quertisch 16.

Die Hauptspindel 6 ist über Lager 18 im Hauptspindelstock 4 drehbar gelagert. Sie trägt an ihrem in den Figuren 1 und 2 rechten Ende ein Werkstückfutter 20, in welches in herkömmlicher Weise ein nicht dargestelltes Drehteil eingespannt werden kann. Die Hauptspindel 6 trägt an ihrem in den Figuren 1 und 2 linken Ende eine Riemenscheibenanordnung 22, die über einen Antriebsriemen mit einer Riemenscheibenanordnung 24 verbunden ist, die auf der Ausgangswelle eines im Hauptspindelstock 4 fest angeordneten Spindelan-triebsmotors 26 befestigt ist.

Der Reitstock 10 ist verschiebbar auf zwei parallelen, in Richtung der Hauptspindelachse 8 verlaufenden Führungsstangen 28, 30 gelagert. Dazu ist der Reitstock 10 mit einer oberen Lagerschalenanordnung 32 und einer unteren Lagerschalenanordnung 34 ausgestattet, die über Verbindungsschrauben 36 miteinander verbindbar und so zusammenspannbar sind, daß der Reitstock 10 auf den Führungsstangen 28, 30 festgeklemmt ist. Die Reitstockspitze 38 ist in einer Pinole 40 gelagert, die mittels eines Handrades 42 in Richtung der Reitstockspitzenachse aus- bzw. eingefahren werden kann.

Der Kreuztisch 12 umfaßt einen unteren Längstisch 14, welcher ebenso wie der Reitstock 10 auf den Führungsstangen 28, 30 verschiebbar gelagert ist, sowie einen oberen Quertisch 16, welcher auf am Längstisch angeordneten Querschienen 44 verschiebbar gelagert ist.

Zur Verschiebebetätigung des Längstisches 14 dient eine im Maschinenbett 2 drehbar gelagerte, zu den Führungsstangen 28, 30 parallele Längsleitspindel 46 mit einem Außengewinde, welches mit dem Innengewinde einer am Längsschlitten 14 fest angeordneten Spindelmutter 48 zusammenwirkt. Durch Verdrehen der Längsleitspindel 46 wird der Längsschlitten 14 in Richtung der Hauptspindelachse 8 verschoben. An dem in den Figuren 1 und 2 rechten Ende der Längsleitspindel 46 ist ein Handrad 50 befestigt, mittels dessen die Längsleitspindel 46 manuell verdreht werden kann. Ein Abschnitt des Handrades 50 ist als Zahnriemenscheibe 52 ausgebildet. An der in den Figuren 1 und 2 rechten Stirnseite des Maschinenbettes 2 ist ein Antriebsmotor 54 so angeordnet, daß seine Ausgangswelle 56 parallel zur Längsleitspindel 46 ausgerichtet ist. Auf der Ausgangswelle 56 sitzt ein Zahnritzel 58. Das Zahnritzel 58 ist mit der Zahnriemenscheibe 52 des Handrades 50 über einen Zahnriemen 60 drehverbunden.

Für die Querverschiebung des Quertisches 16 ist eine Querleitspindel 62 vorgesehen, die am Längstisch 14 drehbar gelagert ist. An dem in Figur 2 unteren Ende der Querleitspindel 62 ist ein Handrad 64 befestigt, mittels dessen die Querleitspindel 62 manuell verdrehbar ist; die Querleitspindel 62 greift mit einem Außengewinde in das Innengewinde einer im Quertisch fest angeordneten Spindelmutter ein, so daß bei einer Verdrehung der Querleitspindel 62 der Quertisch in Richtung des Doppelpfeiles 66 verschoben wird. Ein Abschnitt des Handrades 64 ist als Zahnriemenscheibe 68 ausgebildet, die über einen Zahnriemen 70 mit dem Zahnritzel 72 eines am Längstisch 14 befestigten Antriebsmotors 74 drehverbunden ist.

Wie insbesondere Figur 1 zeigt, ist der Antriebsmotor 54 über eine Verbindungsleitung 76 und der Antriebsmotor 74 über eine Verbindungsleitung 78 mit einer programmierbaren Datenverarbeitungsanlage 80 verbunden, welche einerseits die Wegsteuerung und andererseits die Leistungssteuerung der als Schrittmotoren ausgebildeten Antriebsmotoren 54, 74 bewirkt. Die Verbindungsleitung 78 ist als sogenannte Schleppkabel ausgebildet, welches ein Mitfahren des Antriebsmotors 74 mit dem Längsschlitten 14 ermöglicht.

Die Handräder 50 und 64 (und aus Gründen einer Teilevereinheitlichung auch das Handrad 42) sind gleich aufgebaut. Dieser Aufbau soll am Beispiel des Handrades 50 beschrieben werden. Dieses ist im wesentlichen topfförmig ausgebildet, wobei der der zugeordneten Leitspindel zugewandte Topfboden 82 in eine Auf-stecknabe 84 übergeht, die auf das Ende der Leitspindel 46 aufgesteckt und mit dieser drehfest verbunden ist; die der Leitspindel 46 abgewandte Topföffnung ist durch einen Deckel 86 verschlossen. Die Aufstecknabe 84 ist unter Zwischenschaltung einer Verbindungshülse 88 mit-tels einer Befestigungsmutter 90 mit der Leitspindel 46 drehfest verbunden. Wie Figur 1 erkennen läßt, befindet sich die Befestigungsmutter 90 und das Ende der Längsleitspindel 46 im Topfinneren, welches durch den Deckel 86 nach Außen abgeschlossen ist. Diese Lösung entspricht den Sicherheitsanforderungen und ist auch optisch ansprechend.

Die Zahnriemenscheibe 52 ist durch einen an die Aufstecknabe 84 unmittelbar anschließenden Zahnriemenabschnitt 92 des Handrades 50 gebildet; auf der Aufstecknabe 84 ist ein dieser gegenüber verdrehbarer Skalenring 94 reibschlüssig gelagert, welcher einen Flansch 96 mit einem gegenüber dem Außendurchmesser des Zahnriemenabschnittes 92 größeren Durchmesser hat. Der Flansch 96 begrenzt diesen Zahnriemenabschnitt 92 einseitig. Die andere Seite des Zahnriemenabschnittes 92 ist durch eine entsprechend gestufte Ausbildung des Handrades 50 begrenzt, so daß der Zahnriemen 60 auf dem Zahnriemenabschnitt 92 sicher gehalten wird. Wie insbesondere das Handrad 64 in Figur 2 erkennen läßt, ist der Skalenring 94 mit einer Skalenmarkierung versehen, die in der üblichen Weise mit einer Gegenmarke zusammenwirkt. Der Skalenring 94 ist gegen den Reibschluß auf der Aufstecknabe 84 verdrehbar, um eine gewünschte Skalenstellung einstellen zu können.

Jedes der Handräder ist mit einem Kurbelgriff 98 versehen, welcher für den Fall, daß längere Arbeiten ohne manuelle Vorschubsteuerung vorgesehen sind, abgenommen werden können, so daß sie beim Umlaufen der Handräder die Bedienungsperson nicht gefährden.

An dem dem Handrad 50 abgewandten Ende der Längsleitspindel 46 ist eine Getriebe- und Kupplungseinrichtung 100 angeordnet, die ein Ankuppeln der Längsleitspindel 46 mit unterschiedlichen Übersetzungsverhältnissen an die Hauptspindel 6 erlaubt. Dadurch können in an sich bekannter Weise Spiralbearbeitungen eines in die Hauptspindel 6 eingespannten Werkstückes vorgenommen werden, bei denen die Längsbewegung des Längstisches 14 in einem bestimmten Verhältnis zur Drehbewegung der Hauptspindel 6 stehen muß. Die Ge-triebe- und Kupplungsanordnung 100 ermöglicht dabei eine Spiralbearbeitung mit unterschiedlichen Spiral-steigungen.

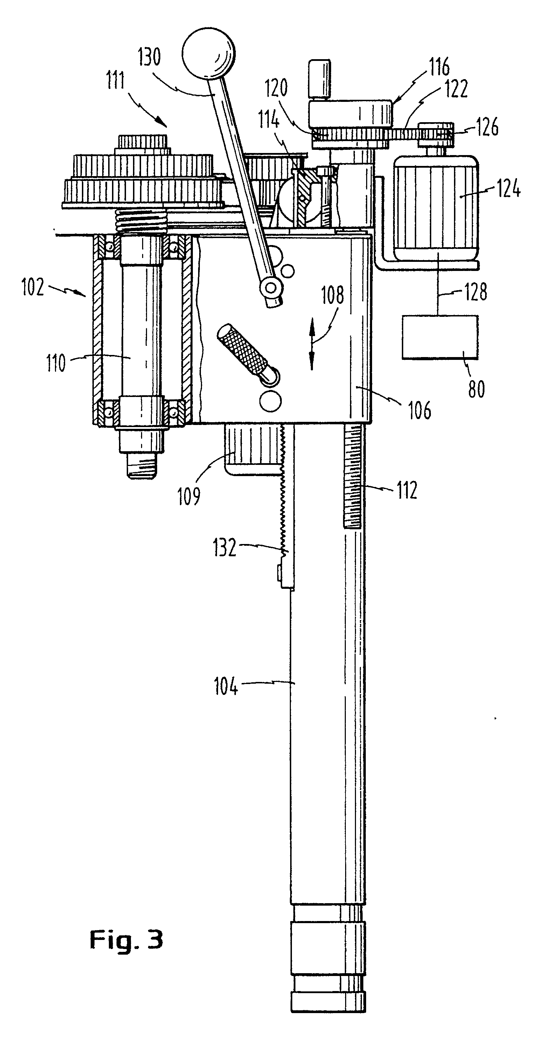

Figur 3 zeigt einen Vertikalspindelständer 102, der in der in Figur 1 angedeuteten Weise in das Maschinenbett 2 einsteckbar ist. Der Vertikalspindelständer 102 umfaßt eine Vertikalsäule 104, auf welcher ein Spindelgehäuse 106 in Richtung des Doppelpfeils 108 verschiebbar gelagert ist. In dem Spindelgehäuse 106 ist eine durch einen Motor 109 über eine Riemenscheibenanordnung 111 antreibbare Vertikalspindel 110 gelagert, in die ein Bearbeitungswerkzeug eingespannt werden kann.

Die Mittel zum Verstellen des Spindelgehäuses 106 umfassen eine Vertikalleitspindel 112, die in einem am oberen Ende der Vertikalsäule 104 angeordneten Lagerbock 114 drehbar und axial unverschiebbar gelagert ist. Am oberen Ende der Vertikalleitspindel 112 ist ein Handrad 116 drehfest angeordnet. Dieses Handrad 116 entspricht dem anhand der Figur 1 genauer beschriebenen Handrad 50 und braucht deshalb nicht nochmals beschrieben zu werden.

Die Vertikalleitspindel 112 ist mit einem Außengewinde versehen, welches mit einem Innengewinde einer fest im Spindelgehäuse 106 angeordneten Spindelmutter 118 zusammenwirkt, so daß beim Verdrehen der Vertikalleitspindel 112 das Spindelgehäuse 106 entlang der Vertikalsäule 104 verstellt wird.

Die mit dem Handrad 116 einstückig ausgebildete Zahnriemenscheibe 120 ist über einen Zahnriemen 122 mit einem auf der Ausgangsquelle eines Antriebsmotors 124 angeordneten Zahnritzel 126 drehverbunden. Der Antriebsmotor 124 ist im vorliegenden Ausführungsbeispiel am Lagerbock 114 anmontiert.

Auch der Antriebsmotor 124 ist über eine Verbindungsleitung 128 mit der DV-Anlage 80 verbunden, die die Wegsteuerung und die Leistungssteuerung des Antriebsmotors 124 durchführt, so daß auch die Vorschubbewegung der Vertikalspindel 110 automatisierbar ist.

Der Handhebel 130 ist mit einem innerhalb des Spindelgehäuses 106 angeordneten Zahnritzel verbunden, welches mit der an der Vertikalsäule 104 befestigten Zahnstange 132 zusammenwirkt. Durch Verschwenken des Handhebels kann das Spindelgehäuse 106 mit der Vertikalspindel beispielsweise beim Bohrbetrieb vertikal verstellt werden.

**Ansprüche**

1. Drehmaschine mit einem Maschinenbett, einem darauf fest angeordneten Hauptspindelstock für eine motorgetriebene Hauptspindel, einem in Richtung der Hauptspindelachse verschiebbar angeordneten Reitstock und einem Kreuztisch, welcher einen in Richtung der Hauptspindelachse verstellbaren Längstisch und einen dazu quer verstellbaren Quertisch umfaßt, wobei der Längstisch über eine drehantreibbare Längsleitspindel und der Quertisch über eine drehantreibbare Querleitspindel betätigbar ist, dadurch **gekennzeichnet**, daß die Längsleitspindel (46) und die Querleitspindel (62) jeweils mit einem Handrad (50 bzw. 64) ausgestattet sind, welches mit einem an einen zugeordneten Stellmotor (54 bzw 74) ankuppelbaren Getrieberad (52, 68) fest verbunden ist.

2. Drehmaschine nach Anspruch 1, dadurch **gekennzeichnet**, daß am Maschinenbett (3) ein Vertikalspindelständer (102) mit einer motorgetriebenen, vertikal verstellbaren Vertikalspindel (110) befestigbar ist, wobei der Verstellantrieb für die Vertikalspindel (110) eine Vertikalleitspindel (112) mit einem Handrad (116) umfaßt, welches mit einem an einen zugeordneten Stellmotor (124) ankuppelbaren Getrieberad (120) fest verbunden ist.

3. Drehmaschine nach Anspruch 1 oder 2, dadurch **gekennzeichnet**, daß das Getrieberad (52, 68, 120) mit dem Handrad (50, 64, 116) jeweils einstückig ausgebildet ist.

4. Drehmaschine nach einem der Ansprüche 1 bis 3, dadurch **gekennzeichnet**, daß das Getrieberad (52, 68, 120) jeweils als Zahnriemenscheibe ausgebildet ist.

5. Drehmaschine nach einem der Ansprüche 1 bis 4, wobei an jedem Handrad ein Kurbelgriff angeordnet ist, dadurch **gekennzeichnet**, daß der Kurbelgriff (98) lösbar am Handrad befestigt ist.

6. Drehmaschine nach einem der Ansprüche 1 bis 5, dadurch **gekennzeichnet**, daß das Handrad (52) im wesentlichen topfförmig ausgebildet ist, wobei der der zugeordneten Leitspindel (46) zugewandte Topfboden (82) in eine Aufstecknabe (84) übergeht, die auf ein Ende der Leitspindel (46) aufsteckbar und mit dieser drehfest verbindbar ist, und wobei die der Leitspindel (46) abgewandte Topföffnung durch einen Deckel (86) verschließbar ist.

7. Drehmaschine nach Anspruch 6, dadurch **gekennzeichnet**, daß die Zahnriemenscheibe (52) durch einen an die Aufstecknabe (84) unmittelbar anschließenden Zahnriemenabschnitt (92) des Handrades (50) gebildet ist und daß auf der Aufstecknabe (84) ein dieser gegenüber verdrehbarer Skalenring (94) reibschlüssig gelagert ist, welcher einen Flansch (96) mit einem gegenüber dem Außendurchmesser des Zahnriemenabschnittes (92) größeren Durchmesser hat, welcher den Zahnriemenabschnitt (92) einseitig begrenzt.

8. Drehmaschine nach einem der Ansprüche 1 bis 7, dadurch **gekennzeichnet**, daß die Zahnriemenscheiben (52, 68, 120) jeweils über Zahnriemen (60, 70, 122) mit über eine NC-Steuerung (80) ansteuerbaren Elektromotoren (54, 74, 124) verbunden sind.

9. Drehmaschine nach Anspruch 8, dadurch **ge-**

kennzeichnet, daß die Elektromotoren (54, 74, 124) jeweils als Schrittmotoren mit integrierter Bremse ausgebildet sind.

Fig. 1

EP 0 416 553 A1

Fig. 2

EP 0 416 553 A1

**Fig. 3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| Y | EP - A2 - 0 044 983 (DECKEL) * Zusammenfassung; Fig.; Anspruch 1 * | 1 | B 23 B 21/00 B 23 Q 5/40 |
| A | * Fig.; Anspruch 2 * | 5,9 | |
| Y | EP - A2 - 0 307 830 (CHIRON) * Ansprüche 1,2; Fig. 2 * | 1 | |
| A | * Ansprüche 3-6; Fig. 3 * | 2,4,8 | |
| A | EP - A1 - 0 039 822 (DECKEL) * Zusammenfassung; Fig. 1-4 * | 1,5 | |
| A | AT - B - 263 484 (DECKEL) * Fig. 1; Anspruch * | 4,5,7 | |
| A | CH - A - 552 444 (HECKEL) * Fig. 2; Ansprüche 1,2 * | 4,5,7 | |
| A | DE - A - 1 950 456 (RATH) | | |

**RECHERCHIERTE SACHGEBIETE (Int. Cl⁵)**

B 23 B 5/00
B 23 B 3/00
B 23 B 19/00
B 23 B 21/00
B 23 Q 5/00
B 23 Q 11/00

Der vorliegende Recherchenbericht wurde für alle Patentansprüche erstellt

| Recherchenort | Abschlußdatum der Recherche | Prüfer |
|---|---|---|
| WIEN | 15-11-1990 | RIEDER |